Europäisches Patentamt

European Patent Office

Office européen des brevets

(11) Veröffentlichungsnummer: **0 408 971 B1**

(12) **EUROPÄISCHE PATENTSCHRIFT**

(45) Veröffentlichungstag der Patentschrift: **08.03.95**

(51) Int. Cl.⁶: **B32B 27/20**, B32B 27/32

(21) Anmeldenummer: **90112639.1**

(22) Anmeldetag: **03.07.90**

---

(54) **Weisse Folie aus Propylenpolymeren.**

---

(30) Priorität: **15.07.89 DE 3923425**

(43) Veröffentlichungstag der Anmeldung:
**23.01.91 Patentblatt 91/04**

(45) Bekanntmachung des Hinweises auf die
Patenterteilung:
**08.03.95 Patentblatt 95/10**

(84) Benannte Vertragsstaaten:
**BE DE ES FR GB IT**

(56) Entgegenhaltungen:
**EP-A- 0 044 515**
**EP-A- 0 155 595**
**EP-A- 0 244 614**
**DE-A- 3 817 909**
**FR-A- 1 181 746**

(73) Patentinhaber: **HOECHST AKTIENGESELL-
SCHAFT**

**D-65926 Frankfurt (DE)**

(72) Erfinder: **Bothe, Lothar, Dr.
Kurt-Schumacher-Strasse 69E
D-6500 Mainz-Gonsenheim (DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung bezieht sich auf eine biaxial streckorientierte, weiße Folie mit einer Trägerschicht auf Basis von Propylenpolymeren, die ein Gemisch von Teilchen aus Calciumcarbonat und Titandioxid enthält und auf einer oder beiden Oberflächen mindestens eine Deckschicht aufweist.

Eine Folie dieser Art ist beispielsweise aus der EP-A-0 244 614 bekannt. Die Trägerschicht dieser Folie besteht aus einer Polymermischung von Polypropylen und Polystyrol und enthält 5 bis 15 Gew.-% pulverförmige Füllstoffe. Als geeignete Füllstoffe werden auch Mischungen aus Calciumcarbonat, Siliciumdioxid und Titandioxid eingesetzt. Die Teilchengröße liegt im Bereich von 2 bis 5 Mikrometer. Es ist auch Stand der Technik, Titandioxid-Pigmente mit einem Überzug aus Kieselsäure und Tonerde in thermoplastische Kunststoffe einzuarbeiten (DE-A-27 40 561). Die EP-B-0 044 515 gibt die Lehre, die mit den Oxiden von Aluminium, Zink, Titan, Zirconium und/oder Magnesium sowie einer organischen Substanz wie langkettige Fettsäuren, Alkohole oder Polydimethylsiloxan überzogenen $TiO_2$-Pigmente in Kunststoffüberzuge z.B. aus Polyethylen für Papier zu verwenden. Schließlich ist es aus der DE-A-26 46 965 bekannt, $TiO_2$- oder $CaCO_3$-Teilchen mit einem Überzug aus einem Fettsäureester als Füllstoff in thermoplastischen Kunstharzen, z.B. Polypropylen, einzusetzen. Es wurde ferner eine Polypropylenfolie beschrieben, die mit $SiO_2$ und $Al_2O_3$ überzogene $TiO_2$-Partikel enthält, welche gegebenenfalls mit einer polymeren organischen Siliciumverbindung oder einem Polyol beschichtet sind (DE-A-38 17 909).

Es ist Aufgabe der vorliegenden Erfindung, den Weißgrad und die Opazität von Folien der eingangs genannten Art zu verbessern. Die Folie soll weiterhin gute Alterungseigenschaften aufweisen. Hierunter ist die Eigenschaft zu verstehen, daß die Polymeren unter Einwirkung von elektromagnetischer Strahlung wie Licht und insbesondere UV-Strahlen nur geringe Abbauerscheinungen oder Versprödung zeigen, die zu einer Verschlechterung der mechanischen Eigenschaften und Vergilbung der weißen Folie führen. Insbesondere ist die Neigung zur Vergilbung dann störend, wenn die weiße Folie zur werbewirksamen Umhüllung von Gegenständen wie z.B. als Verpackungsfolie, Etikett oder als Kaschierfolie auf Karton, Pappe oder Papier eingesetzt wird. Ferner soll die Folie eine gute Barriere gegenüber Licht und insbesondere UV-Strahlung bilden, so daß sie zur Verpackung strahlungsempfindlicher Güter wie z.B. fetthaltiger Lebensmittel besonders geeignet ist. Eine weitere Aufgabe der Erfindung liegt darin, ein wirtschaftliches Verfahren zur Herstellung dieser Folie anzugeben.

Diese Aufgabe wird gelöst durch die Folie mit den in Anspruch 1 genannten Merkmalen sowie durch das Verfahren nach Anspruch 15. Die abhängigen Ansprüche geben zweckmäßige Weiterbildungen der Folie bzw. des Verfahrens an. Das Propylenpolymere der Träger- oder Basisschicht der Folie ist gewöhnlich ein isotaktisches Homopolymerisat oder Copolymerisat des Propylens mit Ethylen oder Alpha-Olefinen mit 4 bis 8 C-Atomen oder eine Mischung aus Propylen-Homo- und Propylen-Copolymerisaten und/oder anderen Polyolefinen, insbesondere mit 2 bis 6 C-Atomen, wobei die Mischung mindestens 50, insbesondere mindestens 75 Gew.-% Propylen-Homopolymerisat enthält. Das isotaktische Homopolymerisat hat zweckmäßigerweise einen n-heptan-löslichen Anteil von höchstens 15 Gew.-%. In den Copolymerisaten beträgt die Comonomermenge von Ethylen und den Alpha-Olefinen mit 4 bis 8 C-Atomen im allgemeinen maximal 10 Gew.-%, bezogen auf das Copolymerisat. Bevorzugte Comonomere sind Ethylen und Buten-(1). Geeignete Polyolefine in der Polymermischung sind HDPE, LDPE und LLDPE, wobei der Anteil dieser Polyolefine jeweils 15 Gew.-%, bezogen auf die Polymermischung, nicht übersteigt. Diese Polymeren der Basisschicht haben zweckmäßigerweise einen Schmelzflußindex im Bereich von 0,5 g/10 min bis 8 g/10 min bei 230 °C und 2,16 kp Belastung (DIN 53 735), insbesondere von 1,5 g/10 min bis 4 g/10 min.

Die Trägerschicht enthält ein Gemisch aus Teilchen von Titandioxid und Calciumcarbonat. Die Titandioxidteilchen bestehen aus Anatas oder Rutil, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Ihr Anteil beträgt 1,5 bis 5 Gew.-%, bezogen auf die Trägerschicht, die mittlere Teilchengröße ist relativ klein und liegt vorzugsweise bei 0,15 bis 0,30 Mikrometer.

Die Titandioxidteilchen besitzen einen Überzug aus anorganischen Oxiden, wie er üblicherweise als Überzug für $TiO_2$-Weißpigment in Papieren oder Anstrichmitteln zur Verbesserung der Lichtechtheit eingesetzt wird. $TiO_2$ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z.B. in der EP-A-0 044 515 und EP-A-0 078 633 beschrieben. Weiterhin enthält der Überzug organische Verbindungen mit polaren und unpolaren Gruppen. Die organischen Verbindungen müssen bei der Herstellung der Folie durch Extrusion der Polymerschmelze ausreichend thermostabil sein. Polare Gruppen sind beispielsweise -OH, -OR, -COOX, (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z.B. Polydimethylsiloxan und Polymethylhydrogensiloxan.

Der Überzug auf den Titandioxid-Teilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxid-Teilchen. Der Überzug wird auf die Teilchen in wäßriger Suspension aufgebracht. Die anorganischen Oxide werden aus wasserlöslichen Verbindungen, z.B. Alkali-, insbesondere Natriumaluminat, Aluminiumhydroxid, Aluminiumsulfat, Aluminiumnitrat, Natrumsilikat (Wasserglas) oder Kieselsäure in der wäßrigen Suspension ausgefällt.

Unter anorganischen Oxiden wie $Al_2O_3$ und $SiO_2$ sind auch die Hydroxide oder deren verschiedenen Entwässerungsstufen wie z.B. Oxidhydrate zu verstehen, ohne daß man deren genaue Zusammensetzung und Struktur kennt. Auf das $TiO_2$-Pigment werden nach dem Glühen und Mahlen in wäßriger Suspension die Oxidhydrate z.B. des Aluminiums und/oder Siliciums gefällt, die Pigmente dann gewaschen und getrocknet. Diese Auffällung kann somit direkt in einer Suspension geschehen, wie sie im Herstellungsprozeß nach der Glühung und der sich anschließenden Naßmahlung anfällt. Die Auffällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Auffällung erfolgt dann durch Zugabe von Mineralsäure wie Schwefelsäure im pH-Bereich von 5 bis 8. Nach der Auffällung der Metalloxide wird die Suspension noch 15 min bis etwa 2 h gerührt, wobei die aufgefällten Schichten eine Alterung erfahren. Das beschichtete Produkt wird von der wäßrigen Dispersion abgetrennt und nach dem Waschen bei erhöhter Temperatur, insbesondere bei 70 bis 110 °C, getrocknet.

Die absolute Teilchengröße von Titandioxid und Calciumcarbonat sollte 10 Mikrometer nicht übersteigen, da größere Teilchen die optischen Eigenschaften der Folie sowie die Verfahrenssicherheit bei der Herstellung der Folie verschlechtern. Die Calciumcarbonat-Teilchen werden im Vergleich zu den Titandioxid-Teilchen gewöhnlich mit einem größeren mittleren Durchmesser eingesetzt, der bei 0,7 bis 3,0, insbesondere 0,8 bis 1,2 Mikrometer liegt. Der Anteil der Calciumcarbonat-Teilchen beträgt zweckmäßigerweise 4 bis 6 Gew.-%, bezogen auf die Trägerschicht, wobei eine Gesamtmenge an Titandioxid- und Calciumcarbonat-Teilchen von 10 Gew.-%, bezogen auf die Trägerschicht, für einen hohen Weißgrad und hohe Opazität ausreichend ist.

Die Calciumcarbonat-Teilchen bestehen z.B. aus natürlichem Gesteinspulver, z.B. aus Kalkspat, Kalkstein, Calcit oder Kreide, sofern sie nicht durch andere Stoffe zu stark verunreinigt sind. Es können auch durch Fällung erzeugte Carbonat-Teilchen eingesetzt werden.

Gefälltes Calciumcarbonat kann nach verschiedenen Verfahren hergestellt werden. Gewöhnlich wird hierzu natürliches Gesteinspulver auf Basis von Calciumcarbonat, insbesondere natürlicher Kalkstein, oberhalb 900 °C in Calciumoxid und Kohlendioxid zersetzt. Nach dem Löschen des gebrannten Kalkes mit Wasser wird mit gereinigtem Kohlendioxid carbonisiert. Man erhält die Calciumcarbonat-Teilchen in wäßriger Suspension.

Die Calciumcarbonat-Teilchen besitzen vorzugsweise einen Überzug auf Basis von hydrophoben Verbindungen, insbesondere Kohlenwasserstoffketten enthaltenden Verbindungen, die mindestens 8, vorzugsweise mindestens 12, insbesondere mindestens 14 C-Atome aufweisen. Besonders bevorzugt sind gesättigte organische Fettsäuren mit 8 bis 30, insbesondere 14 bis 24 C-Atomen, ihre Natrium- oder Kaliumsalze oder ihre Alkylester, insbesondere mit 1 bis 18 C-Atomen, sowie natürliche oder synthetische Wachse auf Basis von Kohlenwasserstoffen, Säuren, Estern, Seifen oder Säureamiden, Polypropylen-Wachse oder Polyethylenwachse. Die Fettsäuren, ihre Salze und Ester werden insbesondere aus tierischen oder pflanzlichen Fetten oder Ölen gewonnen, z.B. aus Sojaöl, Palmöl, Kokosnußöl oder Erdnußöl, und liegen folglich als Gemisch verschiedener höherer Fettsäuren vor. Besonders bevorzugt werden Palmitinsäure, Stearinsäure und Hydroxystearinsäure, ihre Alkalisalze oder Alkylester mit 1 bis 18 C-Atomen, z.B. Methyl-, Butyl- oder Decylstearat, eingesetzt. Es ist auch möglich, Gemische dieser Verbindungen als Überzugsmaterial zu verwenden. Als Emulgator können die üblichen ionogenen oder nichtionogenen oberflächenaktiven Mittel eingesetzt werden. Im allgemeinen ist eine Menge von 0,5 bis 5, insbesondere 0,7 bis 1,2 g, bezogen auf 100 g Calciumcarbonat-Teilchen, dieser Verbindungen ausreichend.

Die genannten Verbindungen werden in emulgierter Form zu den in wäßriger Suspension aufgeschlämmten Carbonat-Teilchen gegeben, oder man leitet $CO_2$ in die wäßrige Lösung von Ca-Ionen in Gegenwart der emulgierten hydrophoben Verbindungen. Anschließend wird das Wasser entfernt.

Die ein- oder beidseitig auf die Trägerschicht aufgebrachten Deckschichten können sowohl heiß- als auch kaltsiegelfähige Schichten sein. Es kann sich auch um nicht siegelbare Schichten handeln, die beispielsweise aus dem gleichen Polymeren wie die Trägerschicht bestehen. Alle diese Schichten können ein- oder beidseitig vorliegen. Die beidseitigen Deckschichten können aus dem gleichen oder verschiedenen Materialien bestehen. Eine Heißsiegelschicht hat einen Erweichungspunkt, der mindestens 10 °C niedriger als der Erweichungspunkt der Trägerschicht ist. Die Siegelschicht besteht vorzugsweise aus einem Ethylen-Homopolymerisat (Polyethylen hoher Dichte oder Polyethylen niedriger Dichte), einem LLDPE, einem Copolymerisat aus Propylen als Hauptkomponente und Ethylen, vorzugsweise mit einem Ethylen-Anteil von 4 bis 10 Gew.-% (bezogen auf das Copolymerisat), einem Copolymerisat aus Propylen als Hauptkomponente und Buten-(1), vorzugsweise mit einem Buten-Anteil von 10 bis 15 Gew.-% (bezogen auf das Copolymerisat), einem Terpolymerisat aus Propylen, Ethylen und einem Alpha-Olefin mit 4 bis 10 C-Atomen, vorzugsweise einem solchen aus 93,2 bis 99,0 Gew.-% Propylen, 0,5 bis 1,9 Gew.-% Ethylen und 0,5 bis 4,9 Gew.-% eines Alpha-Olefins mit 4 bis 10 C-Atomen oder aus einer Mischung dieser Polymeren. Die Comonomeren sind in den Polymerisaten im wesentlichen statistisch verteilt. Als besonders bevorzugte Siegelschichten werden statistische Alpha-Olefin-Copolymere eingesetzt, bei denen das Verhältnis zwischen Gewichtsmittelwert $M_W$ derMolmassenverteilung zum Zahlenmittelwert $M_N$ der Molmassenverteilung zwischen 2,5 und 5,5 liegt.

Die Deckschicht bzw. die Deckschichten können auch aus einem Propylenhomopolymeren bestehen, wobei der Schmelzindex des für die Deckschicht eingesetzten Polymeren einen bevorzugt um 0,5 bis 1,0 g/10 min höheren Wert aufweisen soll als der Schmelzindex der für die Basisschicht eingesetzten Polymeren (gemessen bei 230 °C und 2,16 kp Belastung nach DIN 53 735).

Geeignete Kaltsiegelschichten bestehen aus Polymerisaten auf der Basis von natürlichem oder synthetischem Kautschuk. Geeignete äußere Deckschichten bestehen auch aus Acrylaten, wie sie in der EP-A-0 214 790, EP-A-0 254 417 und CH-PS 632 777 beschrieben sind, oder aus Vinylidenchlorid-Copolymerisaten, wie sie in der EP-A-0 088 535 genannt sind. In einer besonderen Ausführungsform besteht die eine Deckschicht aus Acrylat und die andere Deckschicht aus Vinylidenchlorid-Copolymerisat. Diese Verbindungen können bei Bedarf mit einer haftvermittelnden Schicht auf der darunterliegenden Schicht aus Polyolefin verankert werden. Geeignete Primer sind ebenfalls in den genannten Schriften aufgeführt. Während die Kaltsiegelschichten ausschließlich in einem separaten Verfahrensschritt aufgebracht werden (off-line), können die Acrylate bzw. Vinylidenchlorid-Copolymerisate auch in-line vor der Längsstreckung aufgebracht werden. Das In-line-Verfahren ist z.B. in der EP-A-0 214 790 beschrieben.

Bei Verwendung der Folie als Verpackungsmaterial ist der bzw. den Deckschichten zur Verbesserung der Gleitfähigkeit im Hinblick auf eine zufriedenstellende Maschinengängigkeit und im Hinblick auf ein reibungsloses Einfüllen des verpackten Packguts in Beutel ein Gleitmittel zugefügt. Als Gleitmittel wird zweckmäßigerweise ein Polydialkylsiloxan, vorzugsweise mit 1 bis 4 C-Atomen in der Alkylgruppe eingesetzt, wobei Polydimethylsiloxan besonders bevorzugt ist. Die Einsatzmenge des Polydialkylsiloxans in der Deckschicht bzw. den Deckschichten beträgt 0,2 bis 2,5 Gew.-%, vorzugsweise 0,5 bis 1,6 Gew.-%, bezogen auf das Gewicht der Deckschichten.

Die Gesamtdicke der Folie beträgt 25 bis 120, vorzugsweise 30 bis 60 Mikrometer, wobei die Dicke der Deckschicht(en) jeweils 0,1 bis 5, vorzugsweise 0,6 bis 2 Mikrometer beträgt.

Um bestimmte Eigenschaften der erfindungsgemäßen Folie noch weiter zu verbessern, können sowohl die Basisschicht als auch die Deckschicht(en) entsprechende Zusätze in einer jeweils wirksamen Menge enthalten, vorzugsweise seien Antistatika, z.B. N,N-Bisethoxyalkylamin und Nukleierungsmittel, z.B. Sorbitole, genannt. Als positiv hat sich insbesondere der Zusatz von Verarbeitungsstabilisatoren zur Kernschicht erwiesen. Hierbei handelt es sich um Verbindungen, die den thermischen Abbau der Polymeren bei der Herstellung der Folie verhindern sollen. Zu diesen Verbindungen gehören Phosphitstabilisatoren und/oder Diphosphitstabilisatoren wie z.B. Tris-2,4-ditert.butylphenyl)phosphitund Bis-(2,4-ditert.butylphenyl)-pentaerythrit-diphosphit in Mengen von 0,05 bis 0,3 Gew.-%, bezogen auf die Kernschicht. Als besonders vorteilhaft hat sich ferner der Zusatz von optischem Aufheller, z.B. Bisbenzoxazole, Bis-(styryl)biphenyle, Triazin-phenylcumarine oder Benzotriazolphenylcumarine, erwiesen, der in einer Menge von 100 bis 500, insbesondere 150 bis 250 ppm, bezogen auf die Kernschicht, eingesetzt wird. Insbesondere zur Verbesserung der Konfektionierbarkeit kann der Deckschicht bzw. den Deckschichten 0,1 bis 1 Gew.-%, insbesondere 0,2 bis 0,5 Gew.-%, eines organischen oder anorganischen Antiblockmittels zugesetzt werden. Geeignete Antiblockmittel sind beispielsweise organische Polymerisate wie Polyamid, Polyester, Polycarbonate und dergleichen, die mit dem Polymer in der Deckschicht unverträglich sind und in Form von Partikeln vorliegen, oder anorganische Partikel, insbesondere Silicumdioxid.

4

Die Folie kann durch übliche Verfahrenstechnologien zur Herstellung von mehrschichtigen Folien hergestellt werden.

So kann die Folie durch Extrusion der Trägerschicht bzw. durch Coextrusion der die einzelnen Schichten bildenden schmelzflüssigen Polymermaterialien durch eine Flachdüse, Abschreckung und Verfestigung des Schmelzfilms, anschließendes biaxiales Streckorientieren in Längs- und Querrichtung und abschließendes Hitzefixieren hergestellt werden. Zum biaxialen Strecken wird die Folie erhitzt und zuerst in Längsrichtung und anschießend in Querrichtung oder zuerst in Querrichtung und dann in Längsrichtung gestreckt. Die Längsstreckung erfolgt beispielsweise bei 120 bis 130 °C im Verhaltnis 5:1 bis 7:1 und die anschließende Querstreckung bei 160 bis 170 °C im Verhältnis 8:1 bis 10:1, die Hitzefixierung bei 150 bis 160 °C etwa 0,5 bis 10 s lang. Die Oberflächen der Deckschichten können erforderlichenfalls nach der Hitzefixierung noch einer Oberflächenbehandlung unterzogen werden,um der Folie für das Aufbringen weiterer Beschichtungen eine verbesserte Aufnahmefähigkeit zu verleihen und um ihre Verklebbarkeit bzw. Kaschierbarkeit oder Bedruckbarkeit oder Metallisierbarkeit zu verbessern.

Die Trägerschicht wird bevorzugt über Masterbatchtechnik erzeugt, d.h. entsprechend dem gewünschten Gehalt an Titandioxid- und Calciumcarbonat-Teilchen werden Polypropylenrohstoff, Titandioxid-Masterbatch und Calciumcarbonat-Masterbatch einem Extruder zur Bildung der Trägerschicht zugefügt. Unter dem Begriff Masterbatch ist bekanntlich eine Stammischung zu verstehen, insbesondere ein granulatförmiges staubfreies Konzentrat eines Kunststoffrohstoffes mit hohen Mengen an Füllstoffen, das in der Masseaufbereitung als Zwischenprodukt verwendet wird, so als Zusatz zu keine Füllstoffe enthaltendem Granulat vor dem Extrudieren, um daraus bestimmte Mengen an Füllstoff enthaltenden Formkörpern herzustellen. Das erfindungsgemäß für den Zusatz von $TiO_2$ bzw. $CaCO_3$ eingesetzte Masterbatch zeichnet sich dadurch aus, daß es mehr als 30 Gew.-%, bevorzugt 40 bis 75 Gew.-%, bezogen auf das Gesamtgewicht aus Polymeren plus Füllstoffe, an $TiO_2$-Teilchen bzw. $CaCO_3$-Teilchen enthält und daß es als zylinder- oder linsenförmiges Granulat vorliegt. Es ist besonders vorteilhaft, ein kombiniertes Masterbatch mit einem Gehalt von 40 bis 75 Gew.-%, vorzugsweise von 40 bis 70 Gew.-%, an $TiO_2$- und $CaCO_3$-Teilchen einzusetzen. Als Trägerpolymer für das Masterbatch werden Polyolefine, olefinische Mischpolymerisate mit 2 bis 8 C-Atomen je Olefineinheit oder Mischungen aus diesen Verbindungen eingesetzt. Das bevorzugte Trägerpolymer ist Polypropylen, Polyethylen oder eine Mischung von Polypropylen und Polyethylen. Durch das bevorzugte Masterbatchverfahren werden Abrieberscheinungen, die bei der Extrusionsverarbeitung von $TiO_2$-haltigem Polyolefin auftreten, deutlich reduziert.

Durch die Längsstreckung erhält die Trägerschicht eine Vielzahl von Mikrohohlräumen (Vakuolen). Beim Streckvorgang wird die Polymermatrix an den Korngrenzen der $TiO_2$- und $CaCO_3$-Teilchen aufgerissen, was zur Entstehung dieser Hohlräume führt. Folien dieser Art zeigen einen perlmuttartigen Glanz und eine niedrigere Dichte, die im vorliegenden Fall bei 0,55 bis 0,80, insbesondere 0,65 bis 0,75 g/cm³ liegt.

Das Schüttgewicht der Masterbatche ist 700 bis 1 500 g/l, bevorzugt 950 bis 1 250 g/l. Die Bestimmung des Schüttgewichts erfolgt in Anlehnung an DIN 53 466. Das Verhältnis des Schüttgewichts des Polypropylenrohstoffs zum Schüttgewicht des jeweiligen Masterbatches ist kleiner als 0,80, bevorzugt kleiner als 0,65.

Die erfindungsgemäße Folie eignet sich wegen ihrer vorteilhaften Eigenschaften, insbesondere wegen ihres hohen und dauerhaften Weißgrades als Verpackungsmaterial und auch für technische Zwecke, z.B. als Kaschierfolie, Etikettfolie, Trennfolie oder als Klebebandträgerfolie.

Die Erfindung wird durch die nachfolgenden Beispiele näher erläutert.

Beispiel 1

Es wird eine Polypropylenfolie mit beidseitig vorhandenen heißsiegelbaren Oberflächenschichten aus einem statistischen Ethylen-Propylen-Copolymerisat ($C_2$-Gehalt 4,5 Gew.-%), das Verhältnis von Gewichtsmittelwert $M_W$ (200.000 g/mol) zu Zahlenmittelwert $M_N$ (50.000 g/mol) der Molmassenverteilung ist 4, bei etwa 270 °C durch eine Flachdüse coextrudiert. Die Mischung (Schmelze) der Kernschicht der Folie besteht aus 91,6 Gew.-% Polypropylen, 4,8 Gew.-% $CaCO_3$ einer mittleren Teilchengröße von 1 Mikrometer und 3,6 Gew.-% $TiO_2$ (Rutil) mit einer mittleren Teilchengröße von 0,2 Mikrometer, das eine anorganische Beschichtung aus $Al_2O_3$ (4 g/100 g $TiO_2$) sowie eine organische Beschichtung aus Stearinsäure (1 g/100 g $TiO_2$) aufweist, wobei die Mischung aus 82 Gew.-% Polypropylen, 10 Gew.-% eines Masterbatches aus 48 Gew.-Tl. $CaCO_3$ und 52 Gew.-Tl. Polypropylen und 8 Gew.-% eines Masterbatches aus 45 Gew.-Tl. $TiO_2$ und 55 Gew.-Tl. Polypropylen gebildet wird. Das jeweilige Schüttgewicht beträgt 530 g/l für Polypropylen, 720 g/l für das Masterbatch mit $CaCO_3$ und 750 g/l für das Masterbatch mit $TiO_2$.

Die Folie wird wie üblich längs und dann quer verstreckt. Die biaxial orientierte Folie hat eine Foliendicke von 50 Mikrometer, wobei die Siegelschichten jeweils 0,8 Mikrometer dick sind. Die Foliendichte beträgt 0,72 g/cm³. Der Oberflächenglanz bei Meßwinkel 20° beträgt 25 Skalenteile (gemessen nach DIN 67 530 mit Meßgerät Dr. Lange, Deutschland, Typ RL 3).

Beispiel 1a

In analoger Weise wie in Beispiel 1 wird eine Polypropylenfolie mit einer nur einseitig vorhandenen Oberflächenschicht aus dem gleichen $C_2$/$C_3$-Copolymeren und einer gegenüberliegenden 3 Mikrometer dicken Oberflächenschicht aus Propylenhomopolymerisat hergestellt. Auf dieser Oberfläche zeigt die Folie bei einem Meßwinkel von 20° einen Glanz von 63 Skalenteilen (DIN 67 530, Meßgerät Dr. Lange, Typ RL 3).

Beispiel 1b

Beispiel 1a wird wiederholt, wobei die 3 $\mu$m dicke PP-Oberflächenschicht von Beispiel 1a zusätzlich mit einer ca. 0,4 $\mu$m dicken Schicht aus statistischem $C_2$/$C_3$-Copolymerisat versehen ist. Das $C_2$/$C_3$-Copolymerisat besitzt einen $C_2$-Gehalt von 4,5 Gew.-%, das Verhältnis von Gewichtsmittelwert $M_W$ (200.000 g/mol) zu Zahlenmittelwert $M_N$ der Molmassenverteilung (50.000 g/mol) beträgt 4. Zur Verbesserung der Bedruckbarkeit wird diese Oberflächenschicht einer Coronabehandlung unterzogen. Die Oberflächenspannung beträgt 40 mN/m. Die Folie zeigt auf dieser Oberfläche, insbesondere auch bei niedrigem Meßwinkel, einen hohen Glanz (Meßwinkel 20°, Glanz 72 Skalenteile, DIN 67 530, Meßgerät Dr. Lange, Typ RL 3), der sich auch nach Bedruckung der Folie positiv bemerkbar macht.

Beispiel 2

Beispiel 1 wird wiederholt, wobei allerdings $CaCO_3$- und $TiO_2$-Gehalt über einen Zusatz von 12 Gew.-% eines kombinierten Masterbatches aus 30 Gew.-% $TiO_2$, 40 Gew.-% $CaCO_3$ und 30 Gew.-% Polypropylen zu 88 Gew.-% Polypropylen erfolgt. Das Schüttgewicht für das kombinierte Masterbatch beträgt 1 050 g/l.

Beispiel 3

Beispiel 2 wird wiederholt, die $TiO_2$-Teilchen sind in analoger Weise mit $Al_2O_3$ beschichtet. Anstelle von Stearinsäure wird Polydimethylsiloxan (1,5 g/100 g $TiO_2$) zur zusätzlichen Beschichtung der $TiO_2$-Teilchen verwendet.

Vergleichsbeispiel 1

Beispiel 2 wird wiederholt, die $TiO_2$-Teilchen sind nur mit $Al_2O_3$ beschichtet (4 g/100 g $TiO_2$).

Vergleichsbeispiel 2

Beispiel 2 wird wiederholt, die $TiO_2$-Teilchen sind nur mit Stearinsäure beschichtet (1 g/100 g $TiO_2$).

Vergleichsbeispiel 3

Beispiel 2 wird wiederholt, die $TiO_2$-Teilchen bleiben unbeschichtet.

Die Opazität, der Weißgrad und die Vergilbungstendenz der erhaltenen Folie sind in der nachfolgenden Tabelle zusammengestellt.

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.

WG = Weißgrad, RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Ein Folienmuster (Größe DIN A 4) wird in einer Vorrichtung vom Typ Suntest CPS der Firma Heraeus, Hanau (DE), mehrere Tage bestrahlt, Bestrahlungsstärke 765 W/m$^2$, und anschließend mit unbewaffnetem Auge mit einem nicht bestrahlten Muster verglichen.

|  | Opazität % | Weißgrad % | Vergilbungstendenz |
|---|---|---|---|
| Beispiel 1/1a/1b | 88 | 90 | sehr gering |
| Beispiel 2 | 92 | 93 | sehr gering |
| Beispiel 3 | 93 | 93 | sehr gering |
| Vergleichsbeispiel 1 | 76 | 78 | gering |
| Vergleichsbeispiel 2 | 82 | 76 | deutlich |
| Vergleichsbeispiel 3 | 76 | 74 | deutlich |

**Patentansprüche**

1. Biaxial streckorientierte, weiße Folie mit einer Trägerschicht auf Basis von Propylenpolymeren, die ein Gemisch von Teilchen aus Titandioxid und Calciumcarbonat enthält, und ein- oder beidseitige Deckschichten, dadurch gekennzeichnet, daß die Teilchen aus Titandioxid eine Beschichtung aus mindestens einem anorganischen Oxid und organischen Verbindungen mit polaren und unpolaren Gruppen aufweisen.

2. Folie nach Anspruch 1, dadurch gekennzeichnet, daß der Anteil der Titandioxid-Teilchen 1,5 bis 5 Gew.-%, bezogen auf die Trägerschicht, beträgt.

3. Folie nach Anspruch 1 oder 2, dadurch gekennzeichnet, daß die mittlere Teilchengröße der Titandioxid-Teilchen 0,15 bis 0,3 Mikrometer beträgt.

4. Folie nach einem der Ansprüche 1 bis 3, dadurch gekennzeichnet, daß die Titandioxid-Teilchen überwiegend aus Rutil bestehen.

5. Folie nach einem der Ansprüche 1 bis 4, dadurch gekennzeichnet, daß die Titandioxid-Teilchen mit 1 bis 12, insbesondere 2 bis 6 g anorganischen Oxiden und 0,5 bis 3, insbesondere 0,7 bis 1,5 g organischer Verbindungen, bezogen auf 100 g Titandioxid-Teilchen, beschichtet sind.

6. Folie nach einem der Ansprüche 1 bis 5, dadurch gekennzeichnet, daß die Titandioxid-Teilchen mit anorganischen Oxiden auf Basis von Aluminium, Silicium, Magnesium und/oder Zink und organischen Verbindungen aus der Gruppe der Fettalkohole, Fettsäuren und Polydiorganosiloxane, insbesondere Polyalkylhydrogensiloxane und/oder Polydialkylsiloxane (Alkyl = $C_1$ bis $C_6$, vorzugsweise $C_1$ bis $C_3$) beschichtet sind.

7. Folie nach einem der Ansprüche 1 bis 6, dadurch gekennzeichnet, daß der Anteil der Calciumcarbonat-Teilchen 4 bis 6 Gew.-%, bezogen auf die Trägerschicht, beträgt.

8. Folie nach einem der Ansprüche 1 bis 7, dadurch gekennzeichnet, daß die mittlere Teilchengröße der Calciumcarbonat-Teilchen 0,7 bis 3,0, insbesondere 0,8 bis 1,2 Mikrometer beträgt.

9. Folie nach einem der Ansprüche 1 bis 8, dadurch gekennzeichnet, daß die Calciumcarbonat-Teilchen aus Kreide oder Calcit bestehen.

10. Folie nach einem der Ansprüche 1 bis 9, dadurch gekennzeichnet, daß die Calciumcarbonat-Teilchen eine Beschichtung aus organischen Fettsäuren mit 12 bis 24, insbesondere 16 bis 20 C-Atomen aufweisen.

11. Folie nach Anspruch 10, dadurch gekennzeichnet, daß die Calciumcarbonat-Teilchen mit 0,5 bis 5, insbesondere 0,7 bis 1,2 g gesättigter organischer Fettsäuren, bezogen auf 100 g Calciumcarbonat-Teilchen, beschichtet sind.

**12.** Folie nach einem der Ansprüche 1 bis 11, dadurch gekennzeichnet, daß die eine Deckschicht aus Propylenhomopolymerisat, vorzugsweise mit einer Dicke von 2 bis 7 Mikrometer, und die andere Deckschicht aus einer Heißsiegelschicht besteht.

**13.** Folie nach Anspruch 12, dadurch gekennzeichnet, daß sich auf der Deckschicht aus Propylenhomopolymerisat eine weitere Schicht aus heißsiegelfähigem Material mit einer Dicke von 0,1 bis 1,5 Mikrometer, vorzugsweise aus einem statistischen $C_2/C_3$-Copolymerisat, insbesondere mit $M_W/M_N = 2,5$ bis 5,5 befindet.

**14.** Folie nach einem der Ansprüche 1 bis 11, dadurch gekennzeichnet, daß wenigstens eine der Deckschichten aus Acrylat oder Vinylidenchlorid-Copolymer besteht.

**15.** Verfahren zur Herstellung der Folie nach einem der Ansprüche 1 bis 14, dadurch gekennzeichnet, daß man zur Herstellung der Trägerschicht eine Mischung aus einem Granulat von Polypropylen, welches keine anorganischen Teilchen enthält, und einem Masterbatch, welches die Titandioxid- und Calciumcarbonat-Teilchen sowie Polypropylengranulat enthält, extrudiert und die erhaltene Folie durch Streckung in Längs-und Querrichtung orientiert und anschließend thermofixiert.

**16.** Verfahren nach Anspruch 15, dadurch gekennzeichnet, daß die Titandioxid- und Calciumcarbonat-Teilchen in einem gemeinsamen Masterbatch vorliegen, wobei der gesamte Anteil der Teilchen, bezogen auf die Mischung von Granulat aus Propylenpolymeren und Titandioxid- und Calciumcarbonat-Teilchen, 40 bis 75 Gew.-% beträgt.

**17.** Verfahren nach Anspruch 15 oder 16, dadurch gekennzeichnet, daß das Schüttgewicht des Masterbatches 700 bis 1 500, insbesondere 950 bis 1 250 g/l (DIN 53 466) beträgt.

**18.** Verwendung der Folie nach einem der Ansprüche 1 bis 14 als Verpackungsmaterial oder für technische Zwecke.

**Claims**

**1.** A biaxially stretch-oriented, white film having a supporting layer based on propylene polymers, which contains a mixture of particles of titanium dioxide and calcium carbonate, and outer layers on one or both sides, wherein the particles of titanium dioxide have a coating composed of at least one inorganic oxide and organic compounds having polar and non-polar groups.

**2.** The film as claimed in claim 1, wherein the proportion of titanium dioxide particles is 1.5 to 5 % by weight, relative to the supporting layer.

**3.** The film as claimed in claim 1 or 2, wherein the mean particle size of the titanium dioxide particles is 0.15 to 0.3 micrometers.

**4.** The film as claimed in any one of claims 1 to 3, wherein the titanium dioxide particles are predominantly of rutile.

**5.** The film as claimed in any one of claims 1 to 4, wherein the titanium dioxide particles are coated with 1 to 12, in particular 2 to 6 g of inorganic oxides and 0.5 to 3, in particular 0.7 to 1.5 g of organic compounds, relative to 100 g of titanium dioxide particles.

**6.** The film as claimed in any one of claims 1 to 5, wherein the titanium dioxide particles are coated with inorganic oxides based on aluminum, silicon, magnesium and/or zinc and organic compounds from the group comprising fatty alcohols, fatty acids and polydiorganosiloxanes, in particular polyalkylhydrogensiloxanes and/or polydialkylsiloxanes (alkyl = $C_1$ to $C_6$, preferably $C_1$ to $C_3$).

**7.** The film as claimed in any one of claims 1 to 6, wherein the proportion of calcium carbonate particles is 4 to 6 % by weight, relative to the supporting layer.

**8.** The film as claimed in any one of claims 1 to 7, wherein the mean particle size of the calcium carbonate particles is 0.7 to 3.0, in particular 0.8 to 1.2 micrometers.

**9.** The film as claimed in any one of claims 1 to 8, wherein the calcium carbonate particles are of chalk or calcite.

**10.** The film as claimed in any one of claims 1 to 9, wherein the calcium carbonate particles have a coating of organic fatty acids having 12 to 24, in particular 16 to 20 carbon atoms.

**11.** The film as claimed in claim 10, wherein the calcium carbonate particles are coated with 0.5 to 5, in particular 0.7 to 1.2 g of saturated organic fatty acids, relative to 100 g of calcium carbonate particles.

**12.** The film as claimed in any one of claims 1 to 11, wherein one outer layer is composed of propylene homopolymer, preferably having a thickness of 2 to 7 micrometers, and the other outer layer is composed of a heat-sealable layer.

**13.** The film as claimed in claim 12, wherein on the outer layer of propylene homopolymer is located a further layer of heat-sealable material having a thickness of 0.1 to 1.5 micrometers, preferably composed of a random $C_2/C_3$ copolymer, in particular one for which $M_W/M_N$ = 2.5 to 5.5.

**14.** The film as claimed in any one of claims 1 to 11, wherein at least one of the outer layers is composed of acrylate or vinylidene chloride copolymer.

**15.** A process for the preparation of films as claimed in any one of claims 1 to 14, which comprises producing the supporting layer by extruding a mixture of granules of polypropylene which contains no inorganic particles and a masterbatch which contains the titanium dioxide and calcium carbonate particles and also polypropylene granules, and orienting the resulting film by longitudinal and transverse stretching, followed by heat setting.

**16.** The process as claimed in claim 15, wherein the titanium dioxide and calcium carbonate particles are present in a common masterbatch, the overall proportion of the particles, relative to the mixture of granules of propylene polymers and titanium dioxide and calcium carbonate particles, being 40 to 75 % by weight.

**17.** The process as claimed in either of claims 15 or 16, wherein the bulk density of the masterbatch is 700 to 1,500, in particular 950 to 1,250 g/l (DIN 53 466).

**18.** The use of the film as claimed in any one of claims 1 to 14 as packaging material or for industrial purposes.

**Revendications**

**1.** Pellicule blanche orientée biaxialement par étirage, comportant une couche de support à base de polymère de propylène, qui contient un mélange de particules de dioxyde de titane et de carbonate de calcium, et des couches de recouvrement sur un côté ou sur les deux, caractérisée en ce que les particules de dioxyde de titane présentent un revêtement d'au moins un oxyde minéral et de composés organiques à groupes polaires et groupes non polaires.

**2.** Pellicule selon la revendication 1, caractérisée en ce que la teneur en particules de dioxyde de titane va de 1,5 à 5 % en poids, par rapport à la couche de support.

**3.** Pellicule selon la revendication 1 ou 2, caractérisée en ce que la taille moyenne des particules de dioxyde de titane va de 0,15 à 0,3 $\mu$m.

**4.** Pellicule selon l'une des revendications 1 à 3, caractérisée en ce que les particules de dioxyde de titane consistent en majeure partie en rutile.

5. Pellicule selon l'une des revendications 1 à 4, caractérisée en ce que les particules de dioxyde de titane sont revêtues avec 1 à 12, en particulier 2 à 6 g d'oxydes minéraux et 0,5 à 3, en particulier 0,7 à 1,5 g de composés organiques, par rapport à 100 g de particules de dioxyde de titane.

6. Pellicule selon l'une des revendications 1 à 5, caractérisée en ce que les particules de dioxyde de titane sont revêtues avec des oxydes minéraux à base d'aluminium, silicium, magnésium et/ou zinc, et des composés organiques choisis dans le groupe des alcools gras, des acides gras et des polydiorganosiloxanes, en particulier des polyalkylhydrogénosiloxanes et/ou des polydialkylsiloxanes (alkyle = $C_1$ à $C_6$, de préférence $C_1$ à $C_3$).

7. Pellicule selon l'une des revendications 1 à 6, caractérisée en ce que la teneur en particules de carbonate de calcium va de 4 à 6 % en poids, par rapport à la couche de support.

8. Pellicule selon l'une des revendications 1 à 7, caractérisée en ce que la taille moyenne des particules de carbonate de calcium va de 0,7 à 3,0, en particulier de 0,8 à 1,2 $\mu$m.

9. Pellicule selon l'une des revendications 1 à 8, caractérisée en ce que les particules de carbonate de calcium sont constituées de craie ou de calcite.

10. Pellicule selon l'une des revendications 1 à 9, caractérisée en ce que les particules de carbonate de calcium comportent un revêtement d'acide gras organique ayant de 12 à 24, en particulier de 16 à 20 atomes de carbone.

11. Pellicule selon la revendication 10, caractérisée en ce que les particules de carbonate de calcium sont revêtues avec 0,5 à 5, en particulier 0,7 à 1,2 g d'acides gras organiques saturés, par rapport à 100 g de particules de carbonate de calcium.

12. Pellicule selon l'une des revendications 1 à 11, caractérisée en ce qu'une des couches de recouvrement est constituée d'un homopolymère de propylène, de préférence ayant une épaisseur de 2 à 7 $\mu$m, et l'autre couche de recouvrement est constituée d'une couche de soudage à chaud.

13. Pellicule selon la revendication 12, caractérisée en ce que, sur la couche de recouvrement à base d'homopolymère de propylène, se trouve une autre couche d'un matériau soudable à chaud, ayant une épaisseur de 0,1 à 1,5 $\mu$m, de préférence à base d'un copolymère statistique $C_2/C_3$, ayant en particulier un rapport $M_p/M_n$ allant de 2,5 à 5,5.

14. Pellicule selon l'une des revendications 1 à 11, caractérisée en ce qu'au moins l'une des couches de recouvrement est constituée d'un copolymère d'acrylate ou de chlorure de vinylidène.

15. Procédé pour la fabrication de la pellicule selon l'une des revendications 1 à 14, caractérisé en ce que, pour la préparation de la couche de support, on extrude un mélange à base d'un produit granulé de polypropylène, qui ne contient pas de particules minérales, et d'un mélange-maître qui contient des particules de dioxyde de titane et de carbonate de calcium ainsi qu'un produit granulé à base de polypropylène, et la pellicule obtenue est orientée par étirage dans le sens longitudinal et dans le sens transversal, et ensuite thermofixée.

16. Procédé selon la revendication 15, caractérisé en ce que les particules de dioxyde de titane et de carbonate de calcium se trouvent dans un mélange-maître commun, la proportion totale des particules, par rapport au mélange du produit granulé à base de polymère de propylène et de particules de dioxyde de titane et de carbonate de calcium, allant de 40 à 75 % en poids.

17. Procédé selon la revendication 15 ou 16, caractérisé en ce que la densité apparente du mélange-maître va de 700 à 1 500, en particulier de 950 à 1 250 g/l (DIN 53 466).

18. Utilisation de la pellicule selon l'une des revendications 1 à 14, en tant que matériau d'emballage ou a des fins industrielles.